# EUROPEAN PATENT SPECIFICATION

(11) **EP 4 239 557 B1**
(45) Date of publication and mention of the grant of the patent: **04.11.2026**
(21) Application number: 23159453.2
(22) Date of filing: 01.03.2023
(51) Int. Cl.: G06Q 30/018, G06Q 20/40

(54) **REAL-TIME FRAUD DETECTION BASED ON DEVICE FINGERPRINTING**
ECHTZEITBETRUGSERKENNUNG AUF DER BASIS VON VORRICHTUNGSFINGERABDRÜCKEN
DÉTECTION DE FRAUDE EN TEMPS RÉEL BASÉE SUR UNE EMPREINTE DIGITALE DE DISPOSITIF

(30) Priority: 01.03.2022 US 202217683486
(43) Date of publication of application: 06.09.2023
(73) Proprietor: OLX Global B.V., 1082 MS Amsterdam (NL)
(72) Inventor: BHARDWAJ, Bhagirath, 122002 Gurugram (IN); ALAM, Tanweer, 122011 Gurugram (IN); GUPTA, Aditya, 122011 Gurgaon (IN); KUMAR, Hitesh, 122006 Gurugram (IN); AGGARWAL, Ankit, 110051 Delhi (IN); MITTAL, Varun, 301019 Bhiwadi (IN); BHATT, Lokesh, 301019 Jaipur (IN); TRIVEDI, Harshit, 208017 Kalyanpur Kanpur (IN)
(74) Representative: FRKelly

(56) References cited:
- US-A1- 2012 158 541
- US-A1- 2021 374 754
- KAWASE RICARDO RKAWASE@TEAM MOBILE DE ET AL: "Internet Fraud The Case of Account Takeover in Online Marketplace", HYPERTEXT AND SOCIAL MEDIA, ACM, 2 PENN PLAZA, SUITE 701NEW YORKNY10121-0701USA, 12 September 2019 (2019-09-12), pages 181 - 190, XP058473883, ISBN: 978-1-4503-6885-8, DOI: 10.1145/3342220.3343651

## Description

### BACKGROUND

An online marketplace enables buyers to purchase items from sellers through a website, a mobile application, a third party, or the like. Given the lack of face-to-face interaction and the relative anonymity of both the buyer and the seller, these online marketplaces can be a breeding ground for fraudulent activity. A common form of fraud is to clone or take-over a genuine seller's account with fake details and use it to trick legitimate buyers into buying something they will never receive. For example, a fraudster may post an expensive item at a significantly discounted price thereby luring victims. Through this scenario, the fraudster may lure the victim to a different website to steal credit card details and other personal information that the customer submits for payment. In another common form of fraud, a fraudster may create multiple fake buyer and seller accounts. The fake buyers then pay fake sellers for non-existent goods or services using stolen credit card numbers. These stolen identities are used to launder money online under the guise of online purchases until the fraud is detected and the cards are blocked.

There has been a large effort to combat marketplace fraud. However, these efforts are primarily "reactive" in nature. In other words, they are formulated after the fraud has been detected thereby giving fraudsters a significant head-start on their scams. In the online marketplace, speed for fraud detection is critical. Detecting the fraud in a relevant amount of time can be difficult. For example, customers often require overnight or two-day shipping. This requires that the fraud be identified before the goods are shipped, otherwise the opportunity is lost. Accordingly, a proactive system for counteracting online marketplace fraud is needed.

US 2012/158541 discloses a fraud management system is configured to store rules for detecting fraud. The fraud management system is configured to receive a transaction involving a consumer and a merchant; obtain network security information associated with malicious activity in a voice network or a data network, where the network security information indicates that the consumer has been involved in malicious activity in the voice network or in the data network; select a subset of rules based on the network security information and information associated with the transaction, the merchant, or the consumer; process the transaction using the subset of rules to generate alarms; process the alarms to generate a fraud score for the transaction; and output information regarding the fraud score to the merchant to assist the merchant in determining whether to accept, deny, or fulfil the transaction.

### BRIEF DESCRIPTION OF THE DRAWINGS

Features and advantages of the example embodiments, and the manner in which the same are accomplished, will become more readily apparent with reference to the following detailed description taken in conjunction with the accompanying drawings.
FIG. 1 is a diagram illustrating a computing environment of an online marketplace for fraud detection in accordance with an example embodiment.
FIG. 2A is a diagram illustrating a process of identifying fraudulent users based on machine learning in accordance with example embodiments.
FIG. 2B is a diagram illustrating a process of auto-banning a new user account based on device fingerprinting in accordance with example embodiments.
FIG. 2C is a diagram illustrating a process of creating a device fingerprint in accordance with an example embodiment.
FIGS. 3A-3C are diagrams illustrating a proactive banning process based on a graph database in accordance with example embodiments.
FIG. 4 is a diagram illustrating a method of automatically banning a new user account in accordance with example embodiments.
FIG. 5 is a diagram illustrating a computing system for performing the methods and processes of the example embodiments.

Throughout the drawings and the detailed description, unless otherwise described, the same drawing reference numerals will be understood to refer to the same elements, features, and structures. The relative size and depiction of these elements may be exaggerated or adjusted for clarity, illustration, and/or convenience.

### DETAILED DESCRIPTION

In the following description, specific details are set forth in order to provide a thorough understanding of the various example embodiments. It should be appreciated that various modifications to the embodiments will be readily apparent to those skilled in the art, and the generic principles defined herein may be applied to other embodiments and applications.

Moreover, in the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. Thus, the present disclosure is not intended to be limited to the embodiments that is shown but is to be accorded the widest scope consistent with the principles and features disclosed herein.

As the Internet continues to evolve, the selling of first and second-hand goods via commerce-based websites and mobile applications has become an increasingly popular activity. Users and/or businesses located at different geographical places may interact with each other through a common online marketplace such as a website or mobile application where sellers place their items for sale. Interested users (*i.e*., potential buyers) can chat, email, or even leave voice notes for sellers soliciting bids, barters, questions, posting reviews, and the like. Users can access the marketplace using mobile devices such as Android and iOS-based devices as well as using a web browser such as when accessing a progressive web application (PWA), website, or the like.

However, online marketplaces are often targets for fraud. For example, fraudsters may employ fake accounts in which fraudulent seller accounts may be created in bulk or account takeover where fraudsters take over seller accounts and use them to sell fictitious items. As another example, fake seller fraud occurs when fraudsters copy profiles of genuine sellers and use them to con customers. As another example, clone fraud refers to fraudsters copying genuine posts from a seller and posting it either on the same platform or other marketplace or social media to double sell. As yet another example, a group of users could be working in tandem. In general, distinguishing genuine sellers from fictitious or fraudulent sellers can be difficult. Furthermore, any delay in the buying/selling process to a genuine user may cause that user to go elsewhere.

Fraud may be detected using transaction data (*e.g*., content posted on a page of an application or a website) and/or user behavior data (*e.g*., clickstream data, etc.) For example, machine learning can be used to process the content and correlate the content with patterns of fraud. When a fraudulent user account is detected, the online marketplace may take steps to "ban" the fraudulent user account, for example, by disabling the user account, prevent it or otherwise restricting the ability of the fraudulent user account to transact within the online marketplace, sending a warning to other uses, and the like. However, at present, there is very little to prevent the fraudster from simply creating a new user account to continue to conduct fraud on the online marketplace.

The example embodiments are directed to a system which can combat the issue of online marketplace fraud in real-time, even detecting new users who have yet to transact within the online marketplace. In particular, the system may use the technique of device fingerprinting to identify a device regardless of the user account. Thus, the device itself can be identified for fraud even when the user account changes. The host platform may include a back-end system for hosting the online marketplace. Here, the clients that transact on the online marketplace may be require to connect to the online marketplace via an application programming interface (API) of the host platform / online marketplace. The API may ensure that each request from a client device include data from the client device which can be used by the backend system to create a device fingerprint. For example, the host platform may create the device fingerprint based on a combination of attributes from the device such as, for example, screen size, browser characteristics, cookies, HTTP header data, browser plug-ins that have been installed, screen size, color, resolution, time zone, system fonts, etc.

By creating a unique identifier of a client device based on device characteristics, the host platform is able to detect a fraudulent user even when the fraudulent user is using a new account with no transaction history. Furthermore, each device fingerprint may be stored as its own node in a graph database. Furthermore, a user account may be stored as a separate node in the graph database. When a fraudulent user is detected, both the user account and the device fingerprint may be "banned" in response. The banned user account and the banned device fingerprint may be stored in the graph database and used for real-time banning and proactive banning.

When a user creates a new account and sends a request to the host platform, for example, to transact within the online marketplace, the host platform may create a device fingerprint of a user device of the new user account based on content included in the request. Here, the host platform may compare the device fingerprint to the list of "banned" device fingerprints which may be stored in the graph database. If the newly created device fingerprint matches an existing device fingerprint of a banned user device, the host platform may automatically ban the new user account. In other words, even though the new user account has yet to transact on the online marketplace, the new user account can be banned from the site / marketplace based on the device fingerprint of the device being used by the user account.

Furthermore, the banned user account may be used to identify other user devices that should also be banned. For example, another device that is being used by the now banned user account may also be proactively banned (*e.g*., by banning a device fingerprints of the other device.) Likewise, any additional user accounts associated with / that use the other device may also be proactively banned. This process may be iteratively performed until no new user accounts or devices can be found. Also, the number of "hops" between the real-time banned user and the proactively banned user accounts may be limited. For example, a parent or a sibling of the banned user may be banned, but a cousin or a grandparent may not be banned, etc.

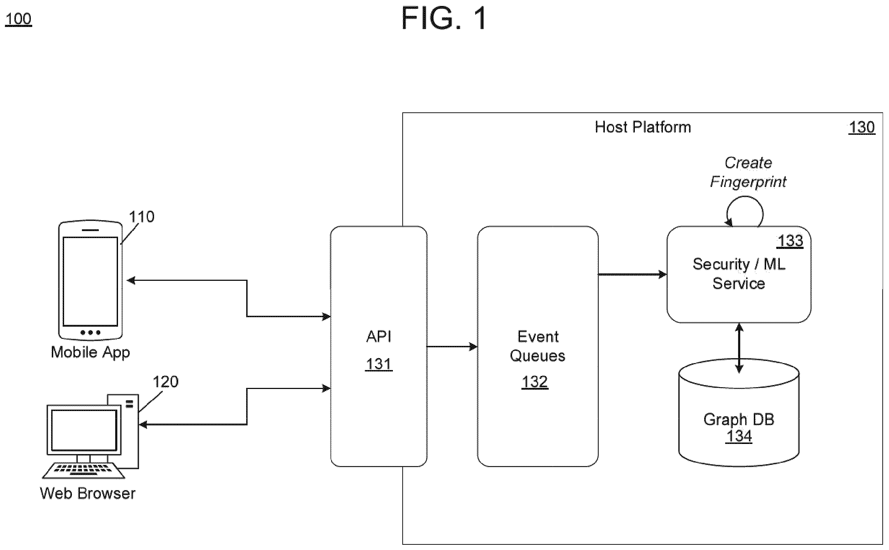

FIG. 1 illustrates a computing environment 100 of an online marketplace for fraud detection in accordance with an example embodiment. Referring to FIG. 1, the computing environment 100 includes a host platform 130 which hosts the online marketplace. As an example, the host platform 130 may be a cloud platform, a web server, a database, a combination of devices, and the like. The host platform 130 may manage various user accounts that interact with each other on the online marketplace. A user may access the online marketplace by connecting to the host platform 130 via a user device such as a user device 110 (*e.g.,* a mobile device, etc.) or a user device 120 (*e.g.,* a personal computer, etc.) These are just examples of the types of devices that can be used. It should be appreciated that both mobile applications / devices and browser-based applications and devices may connect to the online marketplace and transact.

Although the example embodiments refer to an online marketplace, it should be appreciated that the example embodiments can be used on any website, PWA, mobile application, or the like, in which fraud occurs. As an example, the real-time banning process described herein may be applied to vacation rental sites/apps, employment sites/apps, video gaming platforms, and the like.

Each of the user devices 110 and 120 may experience different user sessions. For example, the user device 110 may correspond to a seller and the user device 120 may correspond to a buyer, but embodiments are not limited thereto. The buyer may purchase an item for sale posted by the seller. Each session may result in different pages of the website or mobile application being loaded.

To access the host platform 130 (and the online marketplace), the user devices 110 and 120 may send requests to an application programming interface (API) 131 of the host platform 130. The API 131 may ensure / verify that the request includes the clickstream data of the user and also device attributes capable of creating a device fingerprint. For example, when user device 110 sends a request to transact on the online marketplace, the API 131 ensures / verifies that the request sent from the user device 110 includes both the clickstream data (used for detecting fraud using machine learning, etc.) and device fingerprint attributes (*e.g*., screen size, resolution, plug-in data, time zone, language, etc.) If not, the API 131 may decline the request.

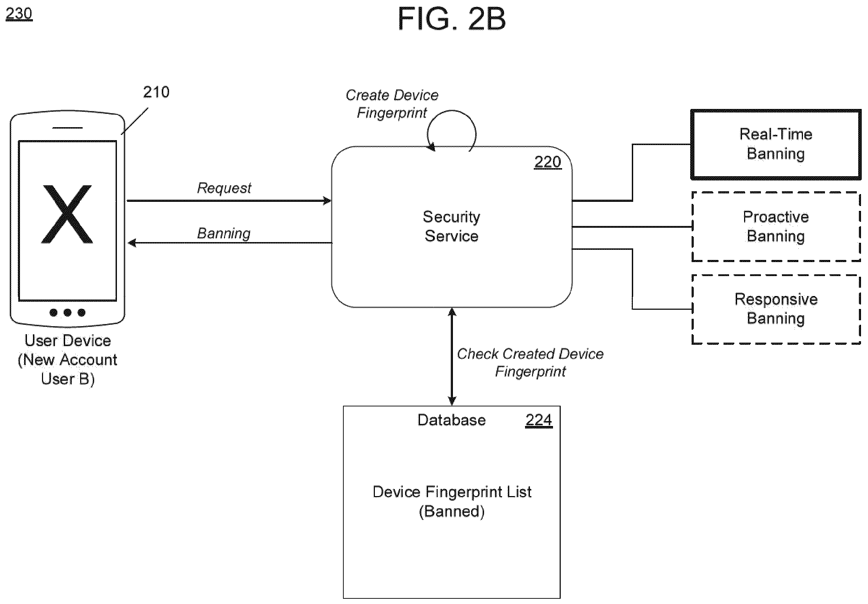

Initially, the buyer and the seller are permitted to use the online marketplace of the host platform 130 without any restrictions. However, as further described in the example of FIG. 2B, the host platform 130 may include a security service 133 that monitors transaction content and clickstream data of the user devices 110 and 120 to determine whether the user accounts associated therewith are fraudulent. For example, requests from the user device 110 and the user device 120 may be stored in an event queue 132 and analyzed by the security service 133 in the order they are received. Initially, the security service 133 may attempt to identify the user account and/or the device fingerprint of the user device 110 within a list of banned user accounts and/or device fingerprints stored in the graph database 134. If not, the security service 133 may analyze the transaction data of the request (as well as other requests from the user device 110) to determine whether the user account is attempting to conduct fraud of some kind within the online marketplace.

As an example, the security service 133 may have installed therein or may otherwise access a remote service that performs machine learning based on the transaction data from the user devices 110 and 120. The machine learning may include executing a plurality of machine learning models to identify fraudulent content. When the security service 133 identifies fraudulent content (*e.g*., fraudulent content posted by user device 110) via one or more of the machine learning models, the user account and the user device 110 associated with the fraudulent content can be banned and identifiers of both may be stored in a graph database 134. Here, the security service 133 may create a device fingerprint of the user device 110 based on the device attributes included in the request from the user device 110, and store the device fingerprint in the graph database 134 with an identifier that the device fingerprint is fraudulent/ banned.

Now, when subsequent users attempt to access the online marketplace, the user devices send a request to the host platform 130 via the API 131. Here, the request is stored in the event queue 132 and analyzed by the security service 133. Initially, the security service 133 may create a device fingerprint of the request, and check / compare the device fingerprint to other "banned" device fingerprints stored in the graph DB 134. If a match is found, the user account / user device are banned.

For example, if a user of the user device 110 is found to have been using their account for fraud, the security service 133 may store a device fingerprint of the user device 110 in the graph DB 134. Likewise, the security service 133 may store an identifier of the user account in the graph DB 134. If the user were to delete their existing account and start a new account, the user device 110 would send a request to transact based on the new user account. In this case, the request would also include the device fingerprint data. Here, the security service 133 will create a device fingerprint of the user device 110 associated with the new user account and match the device fingerprint of the new account to a device fingerprint of the old user account which was deleted. Thus, the security service 133 can detect that the new account is a fraudulent account and ban the new account even before the new user account has had a chance to transact on the online marketplace.

Interest in selling used / second-hand goods through online platforms is growing. This also attracts fraudsters to the online platforms as they get a lot of contact points to commit frauds. The severity and mode of these undesirable activities vary across buyers and sellers. For example, fraudulent sellers/buyers may carry out illegal transactions on the online platforms. These undesirable activities degrade the online platform's reputation and induce resistance among normal users. This may cause low retention and poor enrolment of consumers with the used goods platforms.

In order to detect fraudulent sellers, a systematic approach consisting of statistical models and machine learning models which analyze transaction content can be used but it will not solve the problem fully. These solutions are "reactive" to the problem, and not "proactive". In other words, for a user account to be banned, that user account must commit fraud on the platform. Otherwise, there is no way to connect the user account to other user accounts that have previously been used by the same user to commit fraud. As a result, most fraudsters will simply create multiple accounts. When one account is compromised, the fraudster can move to another / new user account and continue fraud. The collection and processing of all of the user-data to identify fraudsters takes hours or even days, which is sufficient time for fraudulent activities to be conducted on online platforms. Once a fraudster is caught committing fraud via a first user account, they simply switch to a second / new user account to do the fraudulent activities there as well. The anonymity of the online world makes it easy.

In the example embodiments, a solution is provided that can detect a fraudulent user with a heightened level of confidence even before that user transacts on the host platform. The system tracks both users and their devices through device fingerprints. Furthermore, the system can prevent a banned user from creating and using a new account on the same device.

In the example embodiments, device fingerprint banning (DFP) an account can take place instantly, in real-time, without reliance on historical transaction data of a user. Thus, action on a new user account can be taken immediately before the new user account has a chance to transact. Furthermore, proactive banning can also be performed to identify one-off users and devices (or two-off, etc.). The proactive rules used in the proactive banning may not require any preprocessing of loading and transacting data warehouses, so they are fast and reliable. Usage of a Graph DB provides for more linkages between fraudulent users and fraudulent devices (device fingerprints).

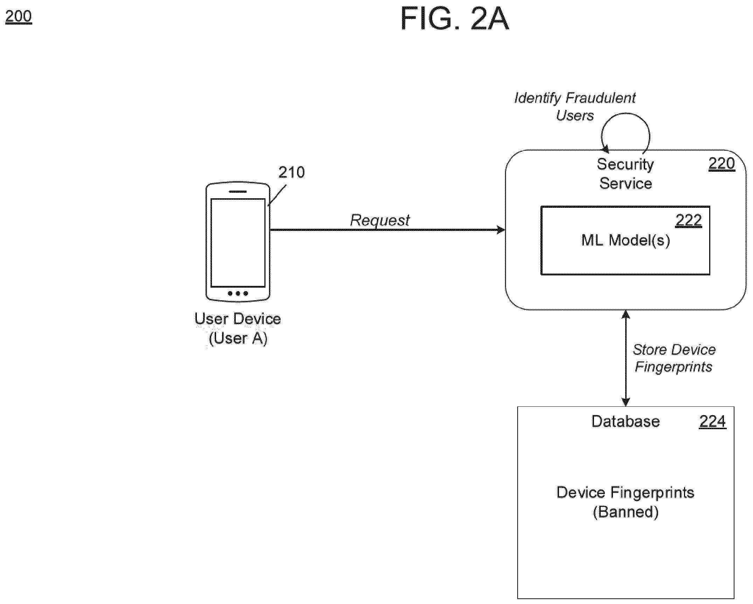

FIG. 2A illustrates a process 200 of identifying a fraudulent user account based on machine learning in accordance with example embodiments. Referring to FIG. 2A, a security service 220 (*e.g.,* hosted by a host platform of an online / mobile application, etc.) may have one or more machine learning models 222 installed therein or accessible via an external service (not shown) that the security service 220 can access and use to identify fraudulent users from clickstream data and transaction data submitted to the host platform. For example, the machine learning model(s) 222 may be trained to identify fraudulent user activity based on user behavior identified from clickstream data and/or transaction content posted to the host platform. The machine learning model(s) 222 may be trained using historical clickstream data and transaction data of previously-labeled fraudulent content / user accounts to learn to identify patterns of fraudulent user behavior.

When a user device 210 submits a request to the host platform (*e.g*., a request to transact on the online marketplace, application, etc.), the security service 220 may identify the request and extract clickstream data including sites, ads, buttons, time spent, etc. that are clicked on by the user, as well as transaction content, messages, ads, posts, etc., submitted to the host platform (*e.g*., the online marketplace, etc.) The machine learning model(s) 222 may be executed on such input data to identify whether the input data correlates to a pattern of behavior of a fraudulent user. If so, the security service may ban the user account associated with the user device 210 that submitted the request. In addition, the security service 220 may also create a device fingerprint of the user device 210 and ban the device fingerprint from transacting on the online marketplace as well. The device fingerprint may be stored in a database 224 (such as a graph DB) which includes a list of banned device fingerprints and user accounts.

FIG. 2B illustrates a process 230 of auto-banning a new user account based on device fingerprinting in accordance with example embodiments. Referring to FIG. 2B, the user of the user device 210 has deleted the user account (User A) in FIG. 2A, and started a new user account in the process 230 of FIG. 2B. Here, the new user account has not been used to transact on the online platform, and in fact, is not listed as a fraudulent user. When the user device 210 submits a request to transact on the host platform, the security service 220 may receive the request, and determine whether the new user account is fraudulent.

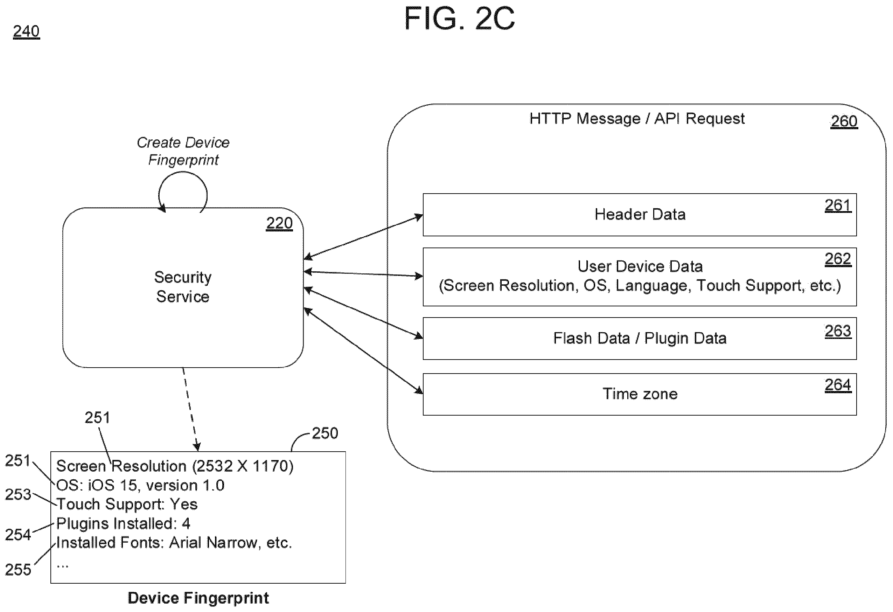

For example, the security service 220 may compare the user account to previously-banned user accounts. As another option, the security service 220 may create a device fingerprint of the user device 210 associated with the new user account, and determine whether the device fingerprint has previously been banned. In this case, the security service 220 would not find the new user account listed under the banned user accounts, since the user account has not been used. However, the security service 220 will find that the device fingerprint of the user device 210 associated with the new user account is already banned by the process 200 shown in FIG. 2A. Thus, the security service 220 can automatically ban the new user account. In addition, the security service 220 may modify the database 224 to store / update the device fingerprint of the user device 210 to include a pointer to the new user account in the database 224 as further explained below with respect to FIG. 2C.

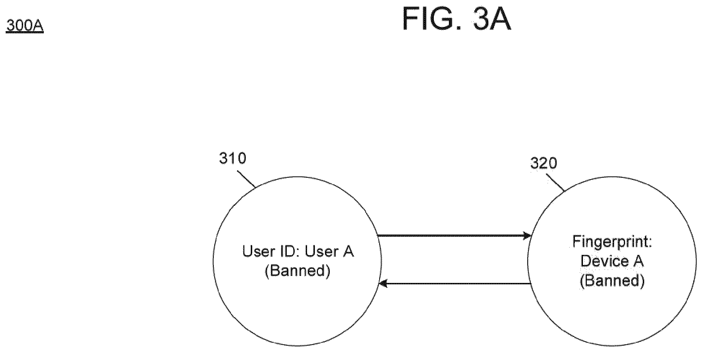

The banning may take different forms. For example, real-time banning may be performed when the device fingerprint identifies a fraudulent device being used again. As another example, proactive banning may be performed as further described in the examples of FIGS. 3A-3C. Proactive banning may be based on one-off users / devices that are related to the banned device. Furthermore, responsive banning may be performed based on transaction content / clickstream data.

FIG. 2C illustrates a process 240 of creating a device fingerprint 250 including a plurality of device attributes 251, 252, 253, 254, and 255, in accordance with an example embodiment. Referring to FIG. 2C, the security service 220 may extract user-device details from a request message 260 submitted by the user device 210. As an example, the request message 260 may include a HTTP request (POST, GET, PUT, etc.), an API call, and the like. In some embodiments, it may include both an HTTP request and an API call. The request message 260 includes various attributes 261, 262, 263, and 264 which can be extracted and used for device fingerprinting. This is not an exhaustive list of attributes that can be used for device fingerprinting. Furthermore, not all of these attributes need to be used. In fact, none of these attributes could be used but different attributes could be used.

In this case, the security service 220 is executing on the server-side. The security service may include a policy that specifies which data attributes are to be extracted from the request message 260. The policy may specify a predefined list of attributes. The API of the host platform (*e.g*., API 131 shown in FIG. 1, etc.) may prevent any message from being delivered that does not include the data attributes specified by the policy. In this example, the API may verify that the request message 260 includes the data attributes 251, 252, 253, 254, and 255 which are then used to construct the device fingerprint 250. Here, values corresponding to the data attributes 251-255 may be extracted and stored in a data record such as a graph database. The record may be used for subsequent comparison when new device fingerprints are generated.

Device fingerprinting (also referred to as canvas fingerprinting, browser fingerprinting, machine fingerprinting, etc.) is a process used to identify a device (or browser) based on its specific and unique configuration. Unlike web cookies that are stored client side (i.e. on a user's device), device fingerprints are stored server-side.

The security service 220 may receive a vast amount of data, sent every time a web request is sent to the host platform. The security service 220 can then use this data that is already inherently stored in the web requests to create a device fingerprint including header data (*e.g*., HTTP header), screen size, screen resolution, number of plugins installed, type of plugins installed, time zone settings, language settings, etc. Device-fingerprinting services create fingerprints based on a combination of multiple data points. The example embodiments may not use an IP address of a device for the purposes of device fingerprinting because an IP address can change easily and therefore IP addresses are not a very effective way of identifying a user account or a user device. In the present application, non-IP address attributes may be used to create the device fingerprint including, but not limited to, the following attributes.
- HTTP request headers
- User agent string
- Installed plugins
- Client time zone
- Information about the client device: screen size, screen resolution, touch support, operating system and language
- Flash data provided by a Flash plugin
- List of installed fonts
- Silverlight data
- List of mime-types
- Timestamp

As people become more connected to the online world and carry out an increasing number of actions online, they are more and more inclined to use multiple devices to accomplish their tasks. And this makes it harder for brands to connect personally with their target audiences. This problem is only augmented because normal means of online tracking are more challenging today. Cookies, which have been the mainstay of digital advertising for years, have become more and more untenable in today's privacy-sensitive environment. For example, cookies do not offer a reliable way to track mobile usage, cookies can be easily disabled or deleted by the consumer, cookies make ads and ad campaigns more easily recognizable to ad blockers, effectively killing any chance an advertiser may have of connecting with a potential customer, and the like.

Meanwhile, device fingerprinting offers a backup method of tracking when cookies can't get the job done. Calculating a device fingerprint may begin when a user visits a website or mobile application. The security service 220 may implement a device fingerprint tracker, which may include a piece of JavaScript, that collects all relevant device information such as the attributes 251-255 from the request message 260.

The more information that is obtained, the easier it is to apply statistics and narrow it down to a single device / person. Furthermore, the security service 220 may assign a unique identifier to the device fingerprint, for example, a hash of the attributes 251-255 included in the device fingerprint, as one example. The advantage here for companies using device fingerprinting is that it's almost impossible to block the creation of device fingerprints because the API of the example embodiments requires the attributes to be included in the request message 260, otherwise the message will not be delivered. Device fingerprints can also be enriched by linking the "user account" to other device fingerprints (i.e. devices).

FIGS. 3A-3C illustrate a proactive banning process based on a graph database in accordance with example embodiments. As a user account is auto-banned from the site / platform, the security service may also ban other user accounts and devices that are related (*e.g.,* a one off, a two off, etc.) of the user account. For example, users that also use the same device as the banned user may be banned as well. As another example, other devices used by the banned user may also be banned, even if it's not the user's primary device and the device belongs to someone else.

FIG. 3A illustrates a process 300A of storing information about a banned user account within a graph database, such as the graph database 134 shown in FIG. 1. Referring to FIG. 3A, the security service may store a first node 310 corresponding to the user account identifier and a second node 320 corresponding to the device fingerprint. The "nodes" may be individually linked to one another. In this example, the first node 310 can include a link or pointer to the second node 320. For example, an identifier of the second node 320 may be stored in the first node 310. The identifier may uniquely identifier the second node 320, for example, based on a hash of the device fingerprint data, etc. Thus, the first node 310 can be mapped to the second node 320. Likewise, the second node 320 may store an identifier of the first node 310 such as a hash value of the user account identifier or some other unique identifier of the first node 310 created by the security service. Thus, the second node 320 can also be mapped to the first node 310.

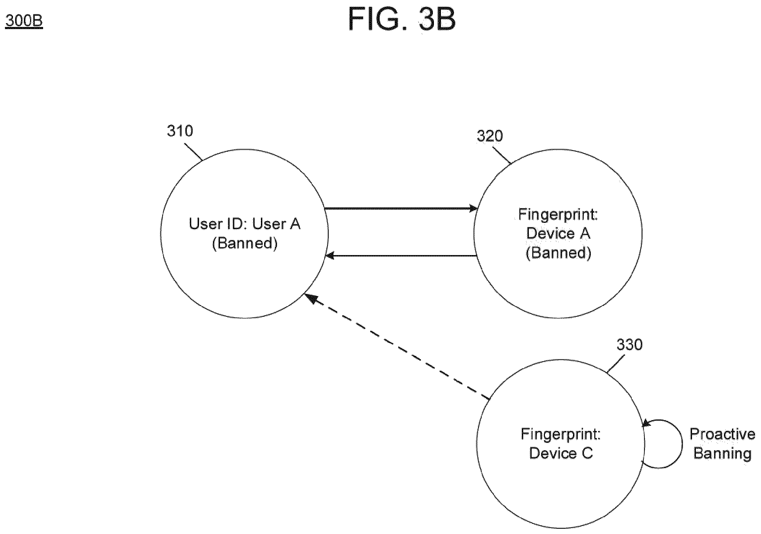

FIG. 3B illustrates a process 300B of proactively banning a second user device that has been previously used by the user account banned in FIG. 3A. Here, the security service may identify any other devices in the graph database that also have a pointer to the first node 310 representing the user account that was banned in FIG. 3A. In this example, a device that is represented by a third node 330 in the graph database that represents a device fingerprint of a second device (Device C). Here, the third node 330 includes a pointer to the first node 310 indicating that the user account represented by the first node 310 used the second device corresponding to the third node 330. For example, the third node 330 may include an identifier of the node 310 stored therein.

Accordingly, the security service may identify the third node 330 based on the pointer to the first node 310, and also ban the device corresponding to the third node 330 on the online resource. Furthermore, the graph database can be updated to reflect that the third node 330 represents a device fingerprint of a device that has been banned. This process may be repeated to an additional hop of users that are directly adjacent to the third node 330, and so on. A limit may be imposed on the number of hops which can be used for banning, for example, two hops, or the like.

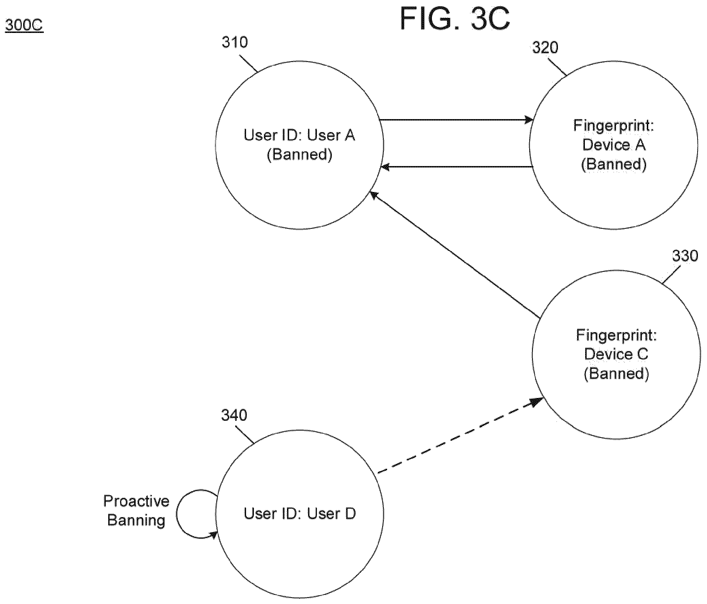

FIG. 3C illustrates a process 300C of proactively banning a second user account that has previously used the user device that is banned in the process of FIG. 3A. Referring to FIG. 3C, the graph database also includes a fourth node 340 that represents a second user account (User D). Here, the second user account also used the first user device corresponding to the second node 320 in FIG. 3A. Thus, the graph database will have established a link between the fourth node 340 of the second user and the second node 320 of the first device fingerprint. Likewise, this same link can be used to ban the second user account corresponding to the fourth node 340, and so on. Each node in the graph database essentially acts as a seed that can be used to identify other nodes (device or user accounts) that should be proactively banned.

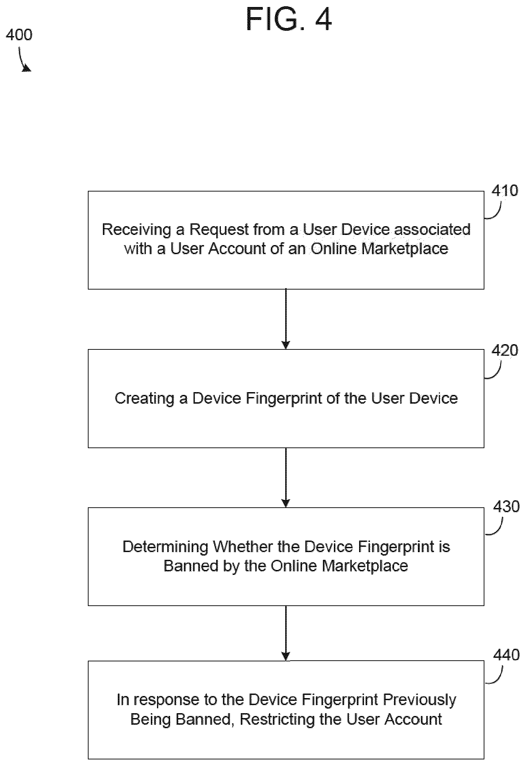

FIG. 4 illustrates a method 400 of automatically banning a new user account in accordance with example embodiments. For example, the method 400 may be performed by a web server, a host platform, a cloud platform, a database, and/or the like. In some embodiments, the method may be performed by a host platform of a mobile application and/or a web-based application such as a progressive web application (PWA), however embodiments are not limited thereto.

Referring to FIG. 4, in 410, the method may include receiving, by a host platform of an online resource, a request from a user device associated with a user account of an online marketplace. The online resource may be a mobile application, a website, a web application such as a PWA, and the like. As another example, the request may be a HTTP request sent from the user device (*e.g.,* a front-end of a mobile application, web browser, etc.). As another example, the request may be an API call, or the like. The request may include a number of different device attributes which can be used for device fingerprinting including screen size, resolution, operating system, browser plugins, time zone, language settings, and the like. Multiple data attributes may be combined to create a unique device fingerprint. The attributes may be non-IP address attributes because an IP address is not a static identifier and can easily be changed by the user device (*e.g*., by simply restarting the user device, etc.)

In 420, the method may include creating, by the host platform, a device fingerprint of the user device based on a plurality of device attributes included in the request. Here, the system may create the device fingerprint using the combination of data attributes of the device which are obtained or otherwise extracted from the request. In 430, the method may include determining, by the host platform, whether the device fingerprint was previously banned based on previously banned device fingerprints of the online resource. In response to a determination that the device fingerprint has been banned previously, in 440, the method may include automatically restricting, by the host platform, an ability of the user account with the online resource.

In some embodiments, the creating may include creating the device fingerprint based on two or more of a screen size of the user device, plugins installed within a browser of the user device, an operating system of the user device, a language setting of the user device, and a time zone setting of the user device, which are obtained from the request. In some embodiments, the method may further include executing a machine learning model based on historical user transaction data of the online marketplace, identifying a plurality of fraudulent users based on the execution of the machine learning model, and storing a plurality of device fingerprints of the plurality of fraudulent users, respectively, in a graph database.

In some embodiments, the determining may include comparing the device fingerprint of the user device to the plurality of device fingerprints (*e.g*., which have been labelled as banned, etc.) of the plurality of users stored in the graph database. In some embodiments, the receiving may include receiving the request from a new user account that has yet to transact on the online marketplace. In some embodiments, the method may further include queuing the request via an event queue of the host platform and creating the device fingerprint when the request reaches an end of the queue.

In some embodiments, the automatically restricting may include automatically banning the user account from transacting on the online marketplace and mapping an identifier of the user account to an identifier of the device fingerprint in a graph database. In some embodiments, the method may further include identifying another user account that has used the user device based on the device fingerprint, proactively banning the other user account, and mapping an identifier of the other user account to the device fingerprint in the graph database.

The above embodiments may be implemented in hardware, in a computer program executed by a processor, in firmware, or in a combination of the above. A computer program may be embodied on a computer readable medium, such as a storage medium or storage device. For example, a computer program may reside in random access memory ("RAM"), flash memory, read-only memory ("ROM"), erasable programmable read-only memory ("EPROM"), electrically erasable programmable read-only memory ("EEPROM"), registers, hard disk, a removable disk, a compact disk read-only memory ("CD-ROM"), or any other form of storage medium known in the art.

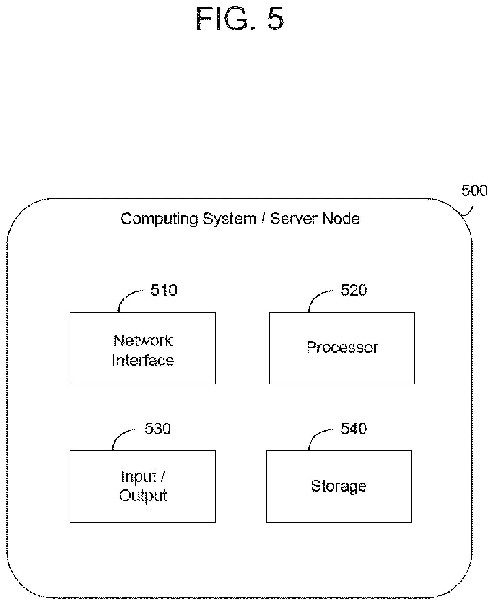

A storage medium may be coupled to the processor such that the processor may read information from, and write information to, the storage medium. In an alternative, the storage medium may be integral to the processor. The processor and the storage medium may reside in an application specific integrated circuit ("ASIC"). In an alternative, the processor and the storage medium may reside as discrete components. For example, FIG. 5 illustrates an example computer system 500 which may represent or be integrated in any of the above-described components, etc. For example, the computer system 500 may represent any of the user device 110, the user device 120, and the host platform 130 shown in FIG. 1. FIG. 5 is not intended to suggest any limitation as to the scope of use or functionality of embodiments of the application described herein. The computing system 500 is capable of being implemented and/or performing any of the functionality set forth hereinabove.

The computing system 500 may include a computer system/server, which is operational with numerous other general purpose or special purpose computing system environments or configurations. Examples of well-known computing systems, environments, and/or configurations that may be suitable for use as computing system 500 include, but are not limited to, personal computer systems, cloud platforms, server computer systems, thin clients, thick clients, hand-held or laptop devices, tablets, smart phones, databases, multiprocessor systems, microprocessor-based systems, set top boxes, programmable consumer electronics, network PCs, minicomputer systems, mainframe computer systems, distributed cloud computing environments, and the like, which may include any of the above systems or devices, and the like. According to various embodiments described herein, the computing system 500 may be a web server.

The computing system 500 may be described in the general context of computer system-executable instructions, such as program modules, being executed by a computer system. Generally, program modules may include routines, programs, objects, components, logic, data structures, and so on that perform particular tasks or implement particular abstract data types. The computing system 500 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 5, the computing system 500 is shown in the form of a general-purpose computing device. The components of computing system 500 may include, but are not limited to, a network interface 510, one or more processors or processing units 520, an input / output 530 which may include a port, an interface, etc., or other hardware, for inputting and/or outputting a data signal from / to another device such as a display, a printer, etc., and a storage device 540 which may include a system memory, or the like. Although not shown, the computing system 500 may also include a system bus that couples various system components including system memory to the processor 520. In some embodiments, the input / output 530 may also include a network interface.

The storage 540 may include a variety of computer system readable media. Such media may be any available media that is accessible by computer system/server, and it may include both volatile and non-volatile media, removable and non-removable media. System memory, in one embodiment, implements the flow diagrams of the other figures. The system memory can include computer system readable media in the form of volatile memory, such as random-access memory (RAM) and/or cache memory. As another example, storage device 540 can read and write to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to the bus by one or more data media interfaces. As will be further depicted and described below, storage device 540 may include at least one program product having a set (e.g., at least one) of program modules that are configured to carry out the functions of various embodiments of the application.

As will be appreciated by one skilled in the art, aspects of the present application may be embodied as a system, method, or computer program product. Accordingly, aspects of the present application may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present application may take the form of a computer program product embodied in one or more computer readable medium(s) having computer readable program code embodied thereon.

Although not shown, the computing system 500 may also communicate with one or more external devices such as a keyboard, a pointing device, a display, etc.; one or more devices that enable a user to interact with computer system/server; and/or any devices (e.g., network card, modem, etc.) that enable computing system 500 to communicate with one or more other computing devices. Such communication can occur via I/O interfaces. Still yet, computing system 500 can communicate with one or more networks such as a local area network (LAN), a general wide area network (WAN), and/or a public network (e.g., the Internet) via network interface 510. As depicted, network interface 510 may also include a network adapter that communicates with the other components of computing system 500 via a bus. Although not shown, other hardware and/or software components could be used in conjunction with the computing system 500. Examples include, but are not limited to: microcode, device drivers, redundant processing units, external disk drive arrays, RAID systems, tape drives, and data archival storage systems, etc.

It will be readily understood that descriptions and examples herein, as generally described and illustrated in the figures, may be arranged and designed in a wide variety of different configurations. Thus, the detailed description of the embodiments is not intended to limit the scope of the application as claimed but is merely representative of selected embodiments of the application. One of ordinary skill in the art will readily understand that the above may be practiced with steps in a different order, and/or with hardware elements in configurations that are different than those which are disclosed. Therefore, although the application has been described based upon some preferred embodiments, it would be apparent to those of skill in the art that certain modifications, variations, and alternative constructions would be apparent.

## Claims

1. A computing system comprising:
a graph database (134) configured to store a plurality of user accounts and device fingerprints as separate nodes (310, 320, 330, 340) with mapping between the user account nodes and device fingerprint nodes in the graph database by storing identifiers of linked nodes in each of the linked nodes, and with banned user accounts and banned device fingerprints identified in the graph database;
a network interface (510) configured to receive (410) a request from a user device associated with a user account of an online resource in the form of an online marketplace, wherein the user account is for transacting in the online marketplace as a buyer or seller; and
a processor configured to:
create (420) a device fingerprint of the user device based on a plurality of device attributes included in the request,
compare the device fingerprint of the user device to the plurality of device fingerprints of the plurality of users stored in the graph database,
determine (430) whether the device fingerprint matches a previously banned device fingerprint stored in the graph database by the online resource; and
in response to a determination that the device fingerprint matches a previously banned device fingerprint, automatically restrict (440) an ability of the user account with the online resource.

2. The computing system of claim 1, wherein the processor is configured to create (420) the device fingerprint based on two or more of a screen size of the user device, plugins installed within a browser of the user device, an operating system of the user device, a language setting of the user device, and a time zone setting of the user device, which are obtained from the request.

3. The computing system of claim 1 or claim 2, wherein the processor is further configured to execute machine learning models based on historical user data of the online resource, identify a plurality of fraudulent users based on the execution of the machine learning models, and store a plurality of device fingerprints of the plurality of fraudulent users, respectively, in the graph database.

4. The computing system of any one of claims 1 to 3, wherein the network interface (510) is configured to receive (410) the request from a new user account that has yet to post content to the online resource.

5. The computing system of any one of the preceding claims, wherein the processor is further configured to queue the request via an event queue (132) of the host platform (130) and create the device fingerprint when the request reaches an end of the event queue to analyze requests in an order the requests are received.

6. The computing system of any one of the preceding claims configured to automatically ban the user account from the online resource and map an identifier of the user account to an identifier of the device fingerprint in the graph database.

7. The computing system of any one of the preceding claims further configured to identify another user account that has used the user device based on the device fingerprint, proactively ban the other user account from the online resource, and map an identifier of the other user account to the device fingerprint in the graph database.

8. A method comprising:
providing a graph database (134) configured to store a plurality of user accounts and device fingerprints as separate nodes (310, 320, 330, 340) with mapping between the user account nodes and device fingerprint nodes in the graph database by storing identifiers of linked nodes in each of the linked nodes, and with banned user accounts and banned device fingerprints identified in the graph database;
receiving (410), by a host platform (130) of an online resource in the form of an online marketplace, a request from a user device associated with a user account of the online resource, wherein the user account is for transacting in the online marketplace as a buyer or seller;
creating (420), by the host platform (130), a device fingerprint of the user device based on a plurality of device attributes included in the request;
comparing, by the host platform (130), the device fingerprint of the user device to the plurality of device fingerprints of the plurality of users stored in the graph database;
determining (430), by the host platform (130), whether the device fingerprint matches a previously banned device fingerprint stored in the graph database by the online resource; and
in response to a determination that the device fingerprint matches a previously banned device fingerprint, automatically restricting (440), by the host platform, an ability of the user account with the online resource.

9. The method of claim 8, wherein the creating (420) comprises creating the device fingerprint based on two or more of a screen size of the user device, plugins installed within a browser of the user device, an operating system of the user device, a language setting of the user device, and a time zone setting of the user device, which are obtained from the request.

10. The method of claim 8 or 9, wherein the method further comprises executing machine learning models based on historical user data of the online resource, identifying a plurality of fraudulent users based on the execution of the machine learning models, and storing a plurality of device fingerprints of the plurality of fraudulent users, respectively, in a graph database.

11. The method of any one of claims 8 to 10, wherein the receiving (410) comprises receiving the request from a new user account that has yet to post content to the online resource.

12. The method of any one of claims 8 to 11, wherein the method further comprises queuing the request via an event queue (132) of the host platform (130) and creating the device fingerprint when the request reaches an end of the event queue (132).

13. The method of any one of claims 8 to 12, wherein the automatically restricting (440) comprises automatically banning the user account from the online resource and mapping an identifier of the user account to an identifier of the device fingerprint in the graph database.

14. The method of any one of claims 8 to 13, wherein the method further comprises identifying another user account that has used the user device based on the device fingerprint, and proactively banning the other user account from the online resource, and mapping an identifier of the other user account to the device fingerprint in the graph database.

15. A non-transitory computer-readable medium comprising instructions which when executed by a processor cause a computer to perform a method as claimed in any one of claims 1 to 14.

## Patentansprüche

1. Computersystem, umfassend:
eine Graphdatenbank (134), die so konfiguriert ist, dass sie eine Vielzahl von Benutzerkonten und Gerätefingerabdrücken als separate Knoten (310, 320, 330, 340) speichert, wobei eine Zuordnung zwischen den Benutzerkontoknoten und den Gerätefingerabdruckknoten in der Graphdatenbank durch Speichern von Kennungen der verknüpften Knoten in jedem der verknüpften Knoten erfolgt und gesperrte Benutzerkonten und gesperrte Gerätefingerabdrücke in der Graphdatenbank identifiziert werden;
eine Netzwerkschnittstelle (510), die so konfiguriert ist, dass sie eine Anfrage (410) von einem Benutzergerät empfängt, das einem Benutzerkonto einer Online-Ressource in Form eines Online-Marktplatzes zugeordnet ist, wobei das Benutzerkonto für Transaktionen auf dem Online-Marktplatz als Käufer oder Verkäufer dient; und
einen Prozessor zum:
Erstellen (420) eines Geräte-Fingerabdrucks des Benutzergeräts auf der Grundlage mehrerer in der Anfrage enthaltener Geräteattribute,
Vergleichen des Geräte-Fingerabdrucks des Benutzergeräts mit der Vielzahl der Geräte-Fingerabdrücke der Vielzahl der in der Graphdatenbank gespeicherten Benutzer,
Feststellen (430), ob der Geräte-Fingerabdruck mit einem zuvor gesperrten Geräte-Fingerabdruck übereinstimmt, der von der Online-Ressource in der Graphdatenbank gespeichert wurde; und
als Reaktion auf die Feststellung, dass der Geräte-Fingerabdruck mit einem zuvor gesperrten Geräte-Fingerabdruck übereinstimmt, wird automatisch die Fähigkeit des Benutzerkontos bei der Online-Ressource eingeschränkt (440).

2. Das Computersystem nach Anspruch 1, wobei der Prozessor so konfiguriert ist, dass er (420) den Geräte-Fingerabdruck auf der Grundlage von zwei oder mehr der folgenden Informationen erstellt: Bildschirmgröße des Benutzergeräts, auf dem Benutzergerät installierte Plugins, Betriebssystem des Benutzergeräts, Spracheinstellung des Benutzergeräts und Zeitzoneneinstellung des Benutzergeräts, die aus der Anfrage gewonnen werden.

3. Das Computersystem nach Anspruch 1 oder Anspruch 2, wobei der Prozessor ferner so konfiguriert ist, dass er auf der Grundlage historischer Benutzerdaten der Online-Ressource Modelle des maschinellen Lernens ausführt, auf der Grundlage der Ausführung der Modelle des maschinellen Lernens eine Vielzahl betrügerischer Benutzer identifiziert und jeweils eine Vielzahl von Geräte-Fingerabdrücken der Vielzahl betrügerischer Benutzer in der Graphdatenbank speichert.

4. Das Computersystem nach einem der Ansprüche 1 bis 3, wobei die Netzwerkschnittstelle (510) so konfiguriert ist, dass sie die Anfrage (410) von einem neuen Benutzerkonto empfängt, das noch keine Inhalte auf der Online-Ressource veröffentlicht hat.

5. Das Computersystem nach einem der vorhergehenden Ansprüche, wobei der Prozessor ferner so konfiguriert ist, dass er die Anfrage über eine Ereigniswarteschlange (132) der Host-Plattform (130) in eine Warteschlange stellt und den Geräte-Fingerabdruck erstellt, wenn die Anfrage das Ende der Ereigniswarteschlange erreicht, um Anfragen in der Reihenfolge ihres Eingangs zu analysieren.

6. Das Computersystem eines der vorhergehenden Ansprüche ist so konfiguriert, dass es das Benutzerkonto automatisch von der Online-Ressource sperrt und eine Kennung des Benutzerkontos einer Kennung des Geräte-Fingerabdrucks in der Graphdatenbank zuordnet.

7. Das Computersystem eines der vorhergehenden Ansprüche ist ferner so konfiguriert, dass es ein anderes Benutzerkonto, das das Benutzergerät verwendet hat, anhand des Geräte-Fingerabdrucks identifiziert, das andere Benutzerkonto proaktiv von der Online-Ressource sperrt und eine Kennung des anderen Benutzerkontos dem Geräte-Fingerabdruck in der Graphdatenbank zuordnet.

8. Verfahren, umfassend:
eine Graphdatenbank (134), die so konfiguriert ist, dass sie eine Vielzahl von Benutzerkonten und Gerätefingerabdrücken als separate Knoten (310, 320, 330, 340) speichert, wobei eine Zuordnung zwischen den Benutzerkontoknoten und den Gerätefingerabdruckknoten in der Graphdatenbank durch Speichern von Kennungen der verknüpften Knoten in jedem der verknüpften Knoten erfolgt und gesperrte Benutzerkonten und gesperrte Gerätefingerabdrücke in der Graphdatenbank identifiziert werden;
Empfangen (410) einer Anfrage durch eine Host-Plattform (130) einer Online-Ressource in Form eines Online-Marktplatzes von einem Gerät eines Benutzers, das einem Benutzerkonto der Online-Ressource zugeordnet ist, wobei das Benutzerkonto dazu dient, auf dem Online-Marktplatz als Käufer oder Verkäufer Transaktionen durchzuführen;
Erstellen (420) eines Geräte-Fingerabdrucks des Geräts des Benutzers durch die Host-Plattform (130) auf der Grundlage einer Vielzahl von Geräte-Attributen, die in der Anfrage enthalten sind;
Vergleichen des Geräte-Fingerabdrucks des Geräts des Benutzers durch die Host-Plattform (130) mit den zahlreichen Geräte-Fingerabdrücken der zahlreichen Benutzer, die in der Graphdatenbank gespeichert sind;
Feststellen (430) durch die Host-Plattform (130), ob der Fingerabdruck des Geräts mit einem zuvor gesperrten Geräte-Fingerabdruck übereinstimmt, der von der Online-Ressource in der Graphdatenbank gespeichert wurde; und
als Reaktion auf die Feststellung, dass der Fingerabdruck des Geräts mit einem zuvor gesperrten Fingerabdruck eines Geräts übereinstimmt, wird durch die Host-Plattform automatisch eine Funktion des Benutzerkontos bei der Online-Ressource eingeschränkt (440).

9. Das Verfahren nach Anspruch 8, wobei das Erstellen (420) das Erstellen des Geräte-Fingerabdrucks auf der Grundlage von zwei oder mehr der folgenden Merkmale umfasst: einer Bildschirmgröße des Benutzergeräts, in einem Browser des Benutzergeräts installierten Plugins, eines Betriebssystems des Benutzergeräts, einer Spracheinstellung des Benutzergeräts und einer Zeitzoneneinstellung des Benutzergeräts, die aus der Anfrage erfasst werden.

10. Das Verfahren gemäß Anspruch 8 oder 9, wobei das Verfahren ferner umfasst: das Ausführen von Modellen des maschinellen Lernens auf der Grundlage historischer Benutzerdaten der Online-Ressource, das Identifizieren einer Vielzahl betrügerischer Benutzer auf der Grundlage der Ausführung der Modelle des maschinellen Lernens und das Speichern einer Vielzahl von Geräte-Fingerabdrücken der jeweiligen betrügerischen Benutzer in einer Graphdatenbank.

11. Verfahren nach einem der Ansprüche 8 bis 10, wobei das Empfangen (410) das Empfangen der Anfrage von einem neuen Benutzerkonto umfasst, das noch keine Inhalte auf der Online-Ressource veröffentlicht hat.

12. Verfahren nach einem der Ansprüche 8 bis 11, wobei das Verfahren ferner das Einreihen der Anfrage in eine Ereigniswarteschlange (132) der Host-Plattform (130) und das Erstellen des Geräte-Fingerabdrucks umfasst, wenn die Anfrage das Ende der Ereigniswarteschlange (132) erreicht.

13. Verfahren nach einem der Ansprüche 8 bis 12, wobei die automatische Einschränkung (440) das automatische Sperren des Benutzerkontos bei der Online-Ressource und das Zuordnen einer Kennung des Benutzerkontos zu einer Kennung des Geräte-Fingerabdrucks in der Graphdatenbank umfasst.

14. Verfahren nach einem der Ansprüche 8 bis 13, wobei das Verfahren ferner das Identifizieren eines anderen Benutzerkontos, das das Benutzergerät verwendet hat, auf der Grundlage des Geräte-Fingerabdrucks und das proaktive Sperren des anderen Benutzerkontos von der Online-Ressource sowie das Zuordnen einer Kennung des anderen Benutzerkontos zum Geräte-Fingerabdruck in der Graphdatenbank umfasst.

15. Ein nichtflüchtiges, computerlesbares Medium, das Anweisungen umfasst, die bei ihrer Ausführung durch einen Prozessor einen Computer dazu veranlassen, ein Verfahren gemäß einem der Ansprüche 1 bis 14 durchzuführen.

## Revendications

1. Système informatique comprenant :
une base de données orientée graphe (134) configurée pour stocker une pluralité de comptes utilisateurs et d'empreintes digitales de dispositif sous forme de nœuds séparés (310, 320, 330, 340) avec un mappage entre les nœuds de comptes utilisateurs et les nœuds d'empreintes digitales de dispositif dans la base de données orientée graphe en stockant les identifiants des nœuds liés dans chacun des nœuds liés, et avec des comptes utilisateurs interdits et des empreintes digitales de dispositif interdits identifiés dans la base de données orientée graphe ;
une interface réseau (510) configurée pour recevoir (410) une requête provenant d'un dispositif utilisateur associé à un compte utilisateur d'une ressource en ligne sous la forme d'une place de marché en ligne, dans lequel le compte utilisateur sert à effectuer des transactions sur la place de marché en ligne en tant qu'acheteur ou vendeur ; et
un processeur configuré pour :
créer (420) une empreinte digitale de dispositif du dispositif utilisateur sur la base d'une pluralité d'attributs de dispositif inclus dans la requête,
comparer l'empreinte digitale de dispositif du dispositif utilisateur à la pluralité d'empreintes digitales de dispositif de la pluralité d'utilisateurs stockées dans la base de données orientée graphe,
déterminer (430) si l'empreinte digitale de dispositif correspond à une empreinte digitale de dispositif précédemment interdite stockée dans la base de données orientée graphe par la ressource en ligne ; et
en réponse à la détermination que l'empreinte digitale de dispositif correspond à une empreinte digitale de dispositif précédemment interdite, restreindre automatiquement (440) une capacité du compte utilisateur auprès de la ressource en ligne.

2. Système informatique selon la revendication 1, dans lequel le processeur est configuré pour créer (420) l'empreinte digitale de dispositif sur la base de deux ou plusieurs éléments parmi une taille d'écran du dispositif utilisateur, des modules d'extension installés dans le navigateur du dispositif utilisateur, un système d'exploitation du dispositif utilisateur, un paramètre de langue du dispositif utilisateur et un paramètre de fuseau horaire du dispositif utilisateur, qui sont obtenus à partir de la requête.

3. Système informatique selon la revendication 1 ou la revendication 2, dans lequel le processeur est en outre configuré pour exécuter des modèles d'apprentissage automatique sur la base de données d'historique d'utilisateur de la ressource en ligne, identifier une pluralité d'utilisateurs frauduleux sur la base de l'exécution des modèles d'apprentissage automatique et stocker une pluralité d'empreintes digitales de dispositif de la pluralité d'utilisateurs frauduleux, respectivement, dans la base de données orientée graphe.

4. Système informatique selon l'une quelconque des revendications 1 à 3, dans lequel l'interface réseau (510) est configurée pour recevoir (410) la requête en provenance d'un nouveau compte utilisateur qui n'a pas encore publié de contenu sur la ressource en ligne.

5. Système informatique selon l'une quelconque des revendications précédentes, dans lequel le processeur est en outre configuré pour mettre en file d'attente la requête via une file d'attente d'événements (132) de la plateforme hôte (130) et créer l'empreinte digitale de dispositif lorsque la requête atteint une fin de la file d'attente d'événements afin d'analyser les requêtes dans l'ordre dans lequel les requêtes sont reçues.

6. Système informatique selon l'une quelconque des revendications précédentes configuré pour interdire automatiquement le compte utilisateur de la ressource en ligne et associer un identifiant du compte utilisateur à un identifiant de l'empreinte digitale de dispositif dans la base de données orientée graphe.

7. Système informatique selon l'une quelconque des revendications précédentes en outre configuré pour identifier un autre compte utilisateur ayant utilisé le dispositif utilisateur sur la base de l'empreinte digitale de dispositif, interdire de manière proactive l'autre compte utilisateur de la ressource en ligne et associer un identifiant de l'autre compte utilisateur à l'empreinte digitale de dispositif dans la base de données orientée graphe.

8. Procédé comprenant :
la fourniture d'une base de données orientée graphe (134) configurée pour stocker une pluralité de comptes utilisateurs et d'empreintes digitales de dispositif sous forme de nœuds séparés (310, 320, 330, 340) avec un mappage entre les nœuds de comptes utilisateurs et les nœuds d'empreintes digitales de dispositif dans la base de données orientée graphe en stockant les identifiants des nœuds liés dans chacun des nœuds liés, et avec des comptes utilisateurs interdits et des empreintes digitales de dispositif interdits identifiés dans la base de données orientée graphe ;
la réception (410), par une plateforme hôte (130) d'une ressource en ligne sous la forme d'une place de marché en ligne, d'une requête provenant d'un dispositif utilisateur associé à un compte utilisateur de la ressource en ligne, dans lequel le compte utilisateur sert à effectuer des transactions sur la place de marché en ligne en tant qu'acheteur ou vendeur ;
la création (420), par la plateforme hôte (130), d'une empreinte digitale de dispositif du dispositif utilisateur sur la base d'une pluralité d'attributs de dispositif inclus dans la requête ;
la comparaison, par la plateforme hôte (130), de l'empreinte digitale de dispositif du dispositif utilisateur à la pluralité d'empreintes digitales de dispositif de la pluralité d'utilisateurs stockées dans la base de données orientée graphe ;
le fait de déterminer (430), par la plateforme hôte (130), si l'empreinte digitale de dispositif correspond à une empreinte digitale de dispositif précédemment interdite et stockée dans la base de données orientée graphe par la ressource en ligne ; et
en réponse à la détermination que l'empreinte digitale de dispositif correspond à une empreinte digitale de dispositif précédemment interdite, la restriction automatique (440), par la plateforme hôte, d'une capacité du compte utilisateur auprès de la ressource en ligne.

9. Procédé selon la revendication 8, dans lequel la création (420) comprend la création de l'empreinte digitale de dispositif sur la base de deux ou plusieurs éléments parmi une taille d'écran du dispositif utilisateur, des modules d'extension installés dans le navigateur du dispositif utilisateur, un système d'exploitation du dispositif utilisateur, un paramètre de langue du dispositif utilisateur et un paramètre de fuseau horaire du dispositif utilisateur, qui sont obtenus à partir de la requête.

10. Procédé selon la revendication 8 ou 9, dans lequel le procédé comprend en outre l'exécution de modèles d'apprentissage automatique sur la base de données d'historique d'utilisateur de la ressource en ligne, l'identification d'une pluralité d'utilisateurs frauduleux sur la base de l'exécution des modèles d'apprentissage automatique, et le stockage d'une pluralité d'empreintes digitales de dispositif de la pluralité d'utilisateurs frauduleux, respectivement, dans une base de données orientée graphe.

11. Procédé selon l'une quelconque des revendications 8 à 10, dans lequel la réception (410) comprend la réception de la demande en provenance d'un nouveau compte utilisateur qui n'a pas encore publié de contenu sur la ressource en ligne.

12. Procédé selon l'une quelconque des revendications 8 à 11, dans lequel le procédé comprend en outre la mise en file d'attente de la requête via une file d'attente d'événements (132) de la plateforme hôte (130) et la création de l'empreinte digitale de dispositif lorsque la requête atteint une fin de la file d'attente d'événements (132).

13. Procédé selon l'une quelconque des revendications 8 à 12, dans lequel la restriction automatique (440) comprend l'interdiction automatique du compte utilisateur de la ressource en ligne et le mappage d'un identifiant du compte utilisateur à un identifiant de l'empreinte digitale de dispositif dans la base de données orientée graphe.

14. Procédé selon l'une quelconque des revendications 8 à 13, dans lequel le procédé comprend en outre l'identification d'un autre compte utilisateur ayant utilisé le dispositif utilisateur sur la base de l'empreinte digitale de dispositif, et l'interdiction proactive de l'autre compte utilisateur de la ressource en ligne, et le mappage d'un identifiant de l'autre compte utilisateur à l'empreinte digitale de dispositif dans la base de données orientée graphe.

15. Support non transitoire lisible par ordinateur comprenant des instructions qui, lorsqu'elles sont exécutées par un processeur, amènent un ordinateur à réaliser un procédé selon l'une quelconque des revendications 1 à 14.
